# EUROPEAN PATENT APPLICATION

(11) **EP 4 510 544 A1**
(43) Date of publication of application: **19.02.2025**
(21) Application number: 24172611.6
(22) Date of filing: 26.04.2024
(51) Int. Cl.: H04L 69/16

(54) **METHOD AND SYSTEM FOR INTER-LAYER COMMUNICATION OF ENERGY STORAGE SYSTEM, AND COMPUTER PROGRAM STORED IN RECORDING MEDIUM FOR EXECUTING THE METHOD**

(30) Priority: 18.08.2023 KR 20230108263
(71) Applicant: Samsung SDI Co., Ltd., Yongin-si, Gyeonggi-do 17084 (KR)
(72) Inventor: Yoo, Jiwon, 17084 Yongin-si, Gyeonggi-do, (KR)
(74) Representative: Gulde & Partner

(57) **Abstract**

A communication method by which an Enterprise Management System, EMS, a system Battery Management System, BMS, and a rack BMS included in an energy storage system, ESS, communicate with each other, the communication method including receiving, by the system BMS (20) from the EMS (10), a Transmission Control Protocol/Internet Protocol, TCPIP, communication command including a Controller Area Network, CAN, communication command for controlling the rack BMS (30), and converting, by the system BMS (20), TCPIP format to CAN format based on the TCPIP communication command and transmitting the converted CAN communication command to the rack BMS (30).

## Description

### BACKGROUND

### 1. Field

Embodiments relate to a method and system for inter-layer communication of an energy storage system (ESS) and a computer program stored in a recording medium for executing the method.

### 2. Description of the Related Art

In recent years, as the demand for portable electronic products such as laptops, video cameras, and mobile phones has rapidly increased, and significant progress has been made in the development of energy storage batteries, robots, and satellites, research into high-performance secondary batteries that are repeatedly rechargeable and dischargeable is underway.

### SUMMARY

Embodiments are directed to a communication method by which an Enterprise Management System (EMS), a system Battery Management System (BMS), and a rack BMS included in an energy storage system (ESS) communicate with each other, the communication method including receiving, by the system BMS from the EMS, a Transmission Control Protocol/Internet Protocol (TCPIP) communication command including a Controller Area Network (CAN) communication command for controlling the rack BMS, and converting, by the system BMS, TCPIP format to CAN format based on the TCPIP communication command and transmitting the converted CAN communication command to the rack BMS.

In embodiments, the receiving of the TCPIP communication command may include performing, by the system BMS and the EMS, TCPIP communication with each other.

In embodiments, the receiving of the TCPIP communication command may include the system BMS receiving the TCPIP communication command including a CAN communication command including information about a CAN ID and CAN data, in TCPIP format.

In embodiments, the receiving of the TCPIP communication command may include receiving two TCPIP communication commands mapped to a CAN ID and four TCPIP communication commands mapped to CAN data, and the transmitting of the converted CAN communication command to the rack BMS may include transmitting the CAN communication command including the CAN ID and the CAN data.

In embodiments, the transmitting of the converted CAN communication command to the rack BMS may include performing CAN communication with each other, by the system BMS and the rack BMS.

Embodiments are directed to a computer program which may be stored on a recording medium for executing the method by using a computing device.

Embodiments are directed to a communication system in which an Enterprise Management System (EMS), a system Battery Management System (BMS), and a rack BMS included in an energy storage system (ESS) communicate with each other, the communication system including the system BMS configured to receive a Transmission Control Protocol/Internet Protocol (TCPIP) communication command including a Controller Area Network (CAN) communication command for controlling the rack BMS from the EMS, convert TCPIP format to CAN format based on the TCPIP communication command, and transmit the converted CAN communication command to the rack BMS.

In embodiments, the system BMS may perform TCPIP communication with the EMS.

In embodiments, the system BMS may receive the TCPIP communication command including a CAN communication command including information about a CAN ID and CAN data, in TCPIP format.

In embodiments, the system BMS may receive two TCPIP communication commands mapped to a CAN ID and four TCPIP communication commands mapped to CAN data, and transmits the CAN communication command including the CAN ID and the CAN data.

In embodiments, the system BMS may perform CAN communication with the rack BMS.

### BRIEF DESCRIPTION OF THE DRAWINGS

Features will become apparent to those of skill in the art by describing in detail exemplary embodiments with reference to the attached drawings in which:
FIGS. 1 and 2 are diagrams schematically illustrating a structure of an energy storage system (ESS) communication system according to embodiments of the present disclosure;
FIG. 3 is a diagram for describing components of a system battery management system (BMS) according to embodiments of the present disclosure;
FIG. 4 is a flowchart for describing an inter-layer communication method of an ESS according to embodiments of the present disclosure; and
FIGS. 5 and 6 are diagrams for describing an inter-layer communication method of an ESS according to embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

As used herein, the term "and/or" includes any and all combinations of one or more of the associated listed items. Expressions such as "at least one of," when preceding a list of elements, modify the entire list of elements and do not modify the individual elements of the list.

Throughout the specification, it will also be understood that when an element is referred to as being "connected to" another element, it can be directly connected to the other element, or it can be electrically connected to the other element and intervening elements may be present. Also, when an element "includes" another element, unless there is a particular description contrary thereto, the element can further include other elements, not excluding the other elements.

Some embodiments may be described in terms of functional block components and various processing steps. Such functional blocks may be realized by any number of hardware and/or software components configured to perform the specified functions. For example, the functional blocks of the present disclosure may be implemented by one or more microprocessors, or may be implemented by circuit configurations for certain functions. The functional blocks of the present disclosure may be implemented in a variety of programming or scripting languages. The functional blocks of the present disclosure may be implemented as algorithms running on one or more processors. The functions performed by the function blocks of the present disclosure may be performed by a plurality of function blocks, or the functions performed by the plurality of function blocks in the present disclosure may be performed by one function block. In addition, the present disclosure may employ the related art for electronic environment setting, signal processing, and/or data processing.

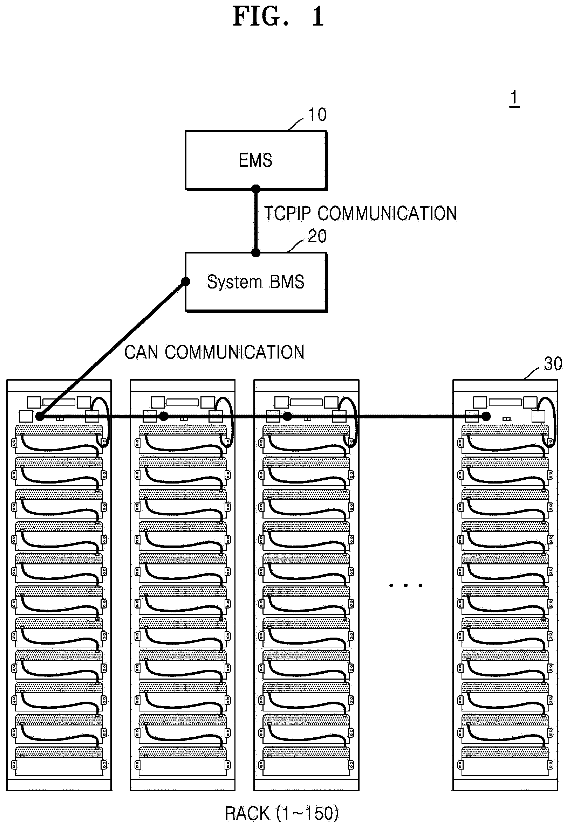

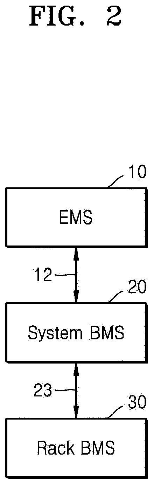

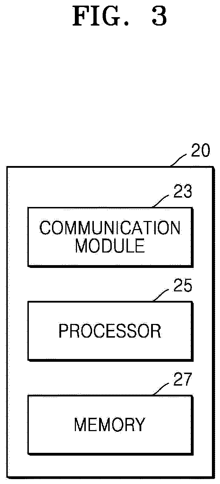

FIGS. 1 and 2 are diagrams schematically illustrating a structure of an energy storage system (ESS) communication system according to embodiments of the present disclosure. Also, FIG. 3 is a diagram for describing components of a system battery management system (BMS) according to embodiments of the present disclosure.

Referring to FIGS. 1 and 2, an ESS communication system 1 according to embodiments of the present disclosure may include an inter-layer communication system of an ESS. In an implementation, as illustrated in FIG. 1, the ESS communication system 1 according to the embodiments of the present disclosure may be a communication system between layers of an ESS, the ESS communication system 1 including an Enterprise Management System (EMS) 10, a system BMS 20, and a rack BMS 30.

In a communication structure of the ESS communication system 1 according to embodiments of the present disclosure, the EMS 10 for customer operation management may be at the top of the communication structure, and then the System BMS 20 that communicates with the EMS 10 may be located, and the System BMS 20 may collect information from the rack BMSs 30 located therebelow and transmits the information to the EMS 10.

In implementations, as illustrated in FIGS. 1 and 2, the EMS 10 and the System BMS 20 may be connected to each other using Transmission Control Protocol/Internet Protocol (TCPIP) communication 12, and the System BMS 20 and the rack BMS 30 may be connected to each other using Controller Area Network (CAN) communication. Additionally, as illustrated in FIG. 1, each battery rack may include a rack BMS 30. The number of battery racks may vary between 1 and 150. Preferably, the number of battery racks may vary between 10 and 100. In a preferred embodiment, each battery rack may include 11 battery modules and each battery module may include 22 battery cells.

For example, as illustrated in FIG. 3, the system BMS 20 according to embodiments of the present disclosure may include a communication module 23, a processor 25, and a memory 27.

The processor 25 may control the system BMS 20. In an implementation, the processor 25 may control communication between the EMS 10, the system BMS 20, and the rack BMS 30.

In an implementation, the system BMS 20 may be a BMS that controls the overall operation of the ESS communication system 1. In an implementation, to perform the operation of the system BMS 20, the processor 25 may be implemented in a form that may optionally include a processor, an application-specific integrated circuit (ASIC), another chipset, a logic circuit, a register, a communication modem, and/or a data processing device, which are known in the art. In an implementation, the processor 25 may perform basic arithmetic, logic, and input/output operations and, e.g., execute program code stored in memory. The processor 25 may store data in the memory 27 or load data stored in the memory 27.

The memory 27 may be a recording medium that may be read by the processor 25 and may include a non-permanent mass storage device such as random-access memory (RAM), read-only memory (ROM), and a disk drive. An operating system and at least one program or application code may be stored in the memory 27. Program code or data for a communication method may be stored in the memory 27 according to embodiments of the present disclosure.

The system BMS 20 may further include the communication module 23. In an implementation, as illustrated in FIG. 2, the system BMS 20 may exchange data with the EMS 10 and the rack BMS 30 using the communication module 23.

The communication method of the communication module 23 may include a communication method that utilizes a communication network (e.g., a mobile communication network, wired Internet, wireless Internet, a broadcasting network) that a network may include, and may also include short-range wireless communication between devices. In an implementation, the communication module 23 may use a TCPIP communication method with the EMS 10. In an implementation, the communication module 23 may use a CAN communication method with the rack BMS 30.

In an implementation, the system BMS 20 according to the present disclosure may include an input/output interface. The input/output interface may be an element used to interface with an input/output device. In an implementation, an input device may include a device such as a keyboard or a mouse, and an output device may include a device such as a display for displaying a communication session of an application. In an implementation, the input/output interface may be an element used to interface with a device in which functions for inputting and outputting may be integrated, such as a touch screen.

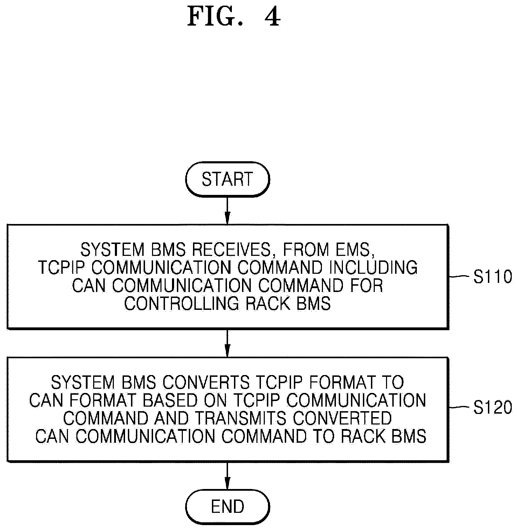

FIG. 4 is a flowchart for describing an inter-layer communication method of an ESS according to embodiments of the present disclosure.

Referring to FIG. 4, in operation S110, the system BMS 20 according to embodiments of the present disclosure may receive, from the EMS 10, a TCPIP communication command including a CAN communication command for controlling the rack BMS 30. In an implementation, the system BMS 20 and the EMS 10 may perform TCPIP communication with each other.

The system BMS 20 according to embodiments of the present disclosure may receive a TCPIP communication command including a CAN communication command including information about a CAN ID and CAN data in TCPIP format.

In an implementation, the system BMS 20 according to embodiments of the present disclosure may receive two TCPIP communication commands mapped to a CAN ID and four TCPIP communication commands mapped to CAN data.

In operation S120, the system BMS 20 according to embodiments of the present disclosure may convert the TCPIP format to the CAN format based on a TCPIP communication command and transmit the converted CAN communication command to the rack BMS 30. In an implementation, the system BMS 20 may perform CAN communication with the rack BMS 30.

In an implementation, the system BMS 20 according to embodiments of the present disclosure may transmit a CAN communication command including a CAN ID and CAN data to the rack BMS 30.

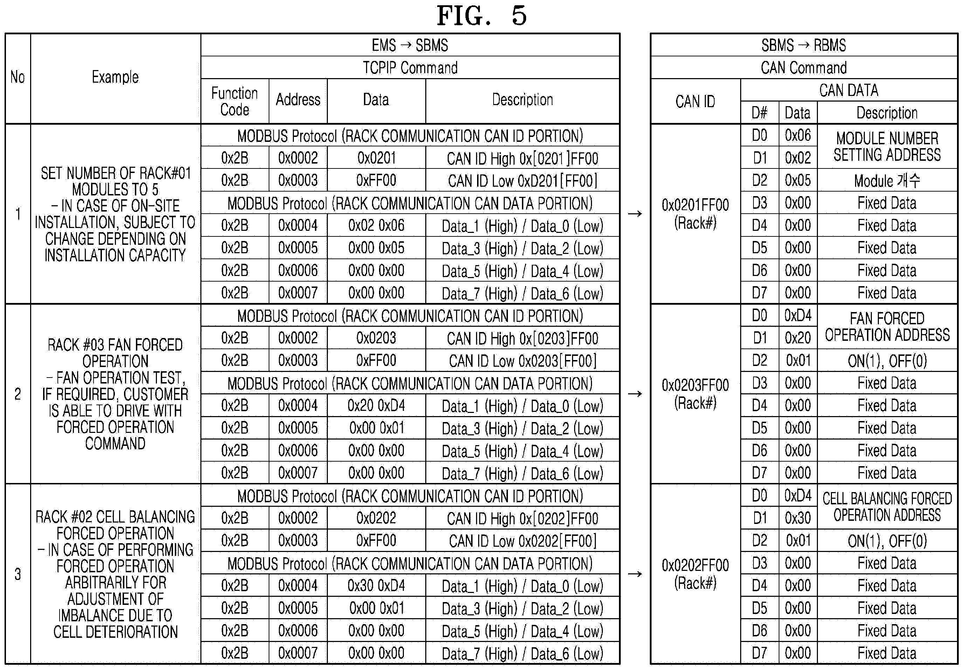

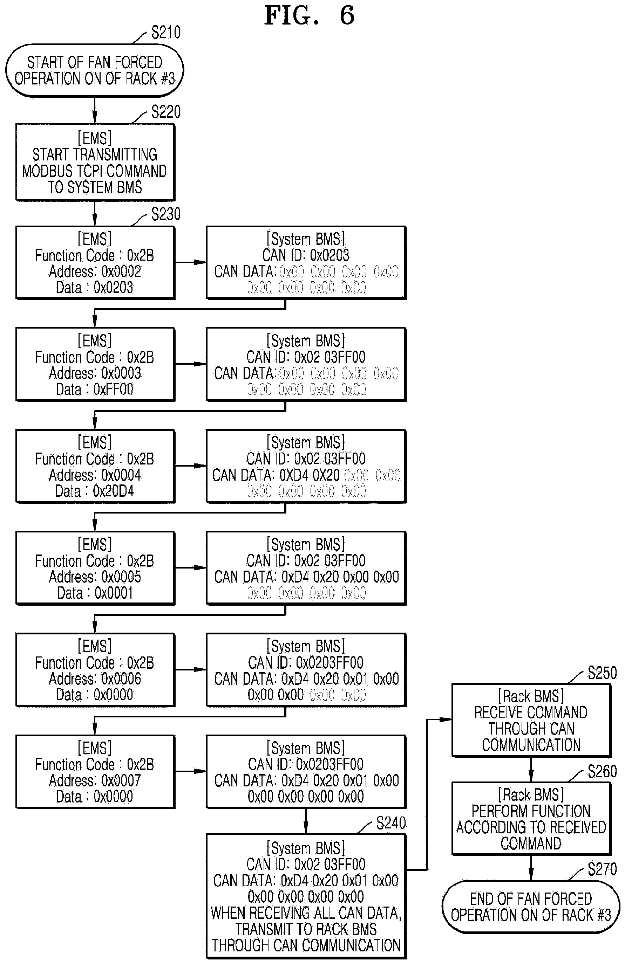

FIGS. 5 and 6 are diagrams for describing an inter-layer communication method of an ESS according to embodiments of the present disclosure.

According to the present disclosure, the CAN communication format itself may be applied to TCPIP (MODBUS) communication in a versatile manner so as not to be vulnerable to command changes and additions of a rack BMS, so that CAN ID and CAN data may be input directly through TCPIP communication. A system BMS may have to simply directly convert TCPIP data received to CAN communication, and an EMS only needs to recognize what kind of command it is and then send a rack BMS change command as is. According to the present disclosure, a system BMS may respond to changes related to rack BMS control commands without additional firmware (FW) changes.

Previously, one TCPIP command was allocated separately and transmitted through CAN communication, which made it vulnerable to rack BMS command changes. However, according to the present disclosure, both CAN ID and CAN data information may be included by using six TCPIP commands, and the EMS may be used as if transmitting a CAN communication command by using these commands, and the system BMS simply converts a command from TCPIP to CAN and transmits the command even if a rack BMS command is added or changed, and thus, additional FW modification may not be necessary.

Referring to FIG. 5, examples of a TCPIP communication command transmitted from the EMS 10 to the system BMS 20 according to embodiments of the present disclosure are shown. Additionally, examples of a CAN communication command transmitted from the system BMS 20 to the rack BMS 30 according to embodiments of the present disclosure are shown.

In an implementation, as illustrated in FIG. 5, a TCPIP communication command transmitted from the EMS 10 to the system BMS 20 may include two TCPIP communication commands mapped to CAN ID and four TCPIP communication commands mapped to CAN data. In an implementation, a CAN communication command transmitted from the system BMS 20 to the rack BMS 30 may include a CAN ID and CAN data.

In an implementation, if a command to change the number of installed modules of Rack #01 to five in a first embodiment is given, a TCPIP communication command may include two TCPIP communication commands mapped to CAN ID (0x0201FF00) and four TCPIP communication commands mapped to CAN data (06 02 05 00 00 00 00 00).

If a FAN forced operation command of Rack #03 in a second embodiment is given, a TCPIP communication command may include two TCPIP communication commands mapped to CAN ID (0x0203FF00) and four TCIPIP communication commands mapped to CAN data (D4 20 01 00 00 00 00 00).

If a Cell Balancing operation command of Rack #02 in a third embodiment is given, a TCPIP communication command may include two TCPIP communication commands mapped to CAN ID (0x0202FF00) and four TCIPIP communication commands mapped to CAN data (D4 30 01 00 00 00 00 00).

Referring to FIGS. 5 and 6 together, in operation S210, a FAN forced operation command of Rack #03 may be started. Next, in operation S220, the EMS 10 may transmit a TCPIP communication command including a CAN ID and CAN data to the system BMS 20.

In operation S230, the system BMS 20 may receive, from the EMS 10, the TCPIP communication command including two TCPIP communication commands mapped to CAN ID (0x0203FF00) and four TCPIP communication commands mapped to CAN data (D4 20 01 00 00 00 00 00).

In operation S240, if receiving all of the two TCPIP communication commands mapped to CAN ID (0x0203FF00) and the four TCPIP communication commands mapped to CAN data (D4 20 01 00 00 00 00 00), which may be related to the FAN forced operation command of Rack#03, the system BMS 20 may transmit a command to the rack BMS 30 via CAN communication.

In operation S250, the rack BMS 30 may receive a command through CAN communication.

In operations S260 and S270, the rack BMS 30 may perform a function according to the received command. In an implementation, the rack BMS 30 may perform the FAN forced operation function of Rack #03.

According to the present disclosure, if a command to perform a specific operation is added to a rack BMS, an EMS may command the rack BMS to perform the command without changing FW of a system BMS.

If a command controlled through CAN communication is added to the rack BMS, in order for the EMS to direct the rack BMS to execute the command, a driver that may be connected directly to the rack BMS through CAN communication and may be capable of CAN communication may be installed in the EMS also. Thus, previously, a command that could be received through TCPIP communication was added to the system BMS, and the EMS sent the command to the system BMS, and the system BMS received the command and passed the command as a CAN communication command that could be received by the rack BMS.

According to the present disclosure, in order to address this problem, a TCPIP command format may be configured to be directly convertible to a CAN communication command format, so that even if any command is additionally changed in the rack BMS, the EMS may directly send a control command to the rack BMS via TCPIP by simply informing the EMS of command information without changing FW of the system BMS. The system BMS may also act as a TCPIP to CAN communication converter to reduce unnecessary system BMS changes.

Various embodiments described above may be implemented in the form of a computer program that can be executed on a computer through various components, and such a computer program may be recorded on a computer-readable medium. In this case, the medium may continuously store a program executable by a computer or temporarily store the program for execution or download. The medium may be various recording means or storage means in the form of single hardware or combined hardware including multiple pieces of hardware, but may be distributed on a network. Examples of the medium include magnetic media such as hard disks, floppy disks and magnetic tapes, optical recording media such as a compact disc-ROM (CD-ROM) and a digital versatile disc (DVD), magneto-optical media such as floptical disks, and ROM, RAM, flash memory, etc. configured to store program instructions. Examples of other media include recording media or storage media managed by an app store that distributes applications, a site or a server for supplying or distributing various other software.

In the present specification, "unit", "module", etc. may be a hardware component such as a processor or circuit, and/or a software component executed by a hardware component such as a processor. For example, the "unit", "module" may be implemented by, for example, components such as software components, object-oriented software components, class components and task components, and processes, functions, attributes, procedures, subroutines, segments of program code, drivers, firmware, microcode, circuits, data, database, data structures, tables, arrays, and variables.

By way of summation and review, currently commercialized secondary batteries include nickel cadmium batteries, nickel hydrogen batteries, nickel zinc batteries, and lithium secondary batteries. Among these, lithium secondary batteries may have little memory effect compared to nickel-based secondary batteries, so may be freely chargeable and dischargeable, and may have a very low self-discharge rate and high energy density, thus receiving attention for these advantages.

A battery including the above secondary batteries may be used in an Energy Storage System (ESS). In a communication structure of ESS, an Enterprise Management System (EMS) for customer operation management may be at the top of the communication structure, and then a System Battery Management System (BMS) that communicates with the EMS may be located, and the System BMS may collect information of lower rack BMSs and transmits the information to the EMS. The EMS and the System BMS may be connected to each other using Transmission Control Protocol/Internet Protocol (TCPIP) communication, and the System BMS and the rack BMSs may be connected to each other using Controller Area Network (CAN) communication. In this structure, when the EMS changes a setting value of the System BMS or issues a command, the command may be entered through TCPIP communication. However, as the EMS and the rack BMSs may not be directly connected to each other through communication, it may be difficult to change a setting value of the rack BMSs or issue a control command.

According to the present disclosure, a communication method and system for effectively communicating between layers of an ESS, and a computer program stored in a recording medium for executing the method may be provided.

One or more embodiments may include a method and system for inter-layer communication of an energy storage system (ESS) and a computer program stored in a recording medium for executing the method.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A communication method by which an Enterprise Management System, EMS, (10), a system Battery Management System, BMS, (20), and a rack BMS (30) included in an energy storage system, ESS, (1) communicate with each other, the communication method comprising:
receiving, by the system BMS (20) from the EMS (10), a Transmission Control Protocol/Internet Protocol, TCPIP, communication command including a Controller Area Network, CAN, communication command for controlling the rack BMS (30); and
converting, by the system BMS (20), TCPIP format to CAN format based on the TCPIP communication command and transmitting the converted CAN communication command to the rack BMS (30).

2. The communication method as claimed in claim 1, wherein the receiving of the TCPIP communication command includes performing, by the system BMS (20) and the EMS (10), TCPIP communication (12) with each other.

3. The communication method as claimed in claim 1 or 2, wherein the receiving of the TCPIP communication command includes the system BMS (20) receiving the TCPIP communication command including a CAN communication command including information about a CAN ID and CAN data, in TCPIP format.

4. The communication method as claimed in claim 3, wherein the receiving of the TCPIP communication command includes:
receiving two TCPIP communication commands mapped to a CAN ID and four TCPIP communication commands mapped to CAN data, and
the transmitting of the converted CAN communication command to the rack BMS (30) includes transmitting the CAN communication command including the CAN ID and the CAN data.

5. The communication method as claimed in one of the preceding claims, wherein the transmitting of the converted CAN communication command to the rack BMS (30) includes performing CAN communication with each other, by the system BMS (20) and the rack BMS (30).

6. A computer program stored on a recording medium for executing the method as claimed in one of claims 1 through 5 by using a computing device.

7. A communication system in which an Enterprise Management System, EMS, (10), a system Battery Management System, BMS, (20) and a rack BMS (30) included in an energy storage system, ESS, (1) are configured to communicate with each other, the communication system comprising:
the system BMS (20) configured to receive a Transmission Control Protocol/Internet Protocol, TCPIP, communication command including a Controller Area Network, CAN, communication command for controlling the rack BMS (30) from the EMS (10), convert TCPIP format to CAN format based on the TCPIP communication command, and transmit the converted CAN communication command to the rack BMS (30).

8. The communication system as claimed in claim 7, wherein the system BMS (20) is adapted to perform TCPIP communication (12) with the EMS (10).

9. The communication system as claimed in claim 7 or 8, wherein the system BMS (20) is adapted to receive the TCPIP communication command including a CAN communication command including information about a CAN ID and CAN data, in TCPIP format.

10. The communication system as claimed in claim 9, wherein the system BMS (20) is adapted to receive two TCPIP communication commands mapped to a CAN ID and four TCPIP communication commands mapped to CAN data, and to transmit the CAN communication command including the CAN ID and the CAN data.

11. The communication system as claimed in one of claims 7 to 10, wherein the system BMS (20) is adapted to perform CAN communication with the rack BMS (30).

## Amended claims

### Amended claims in accordance with Rule 137(2) EPC.

1. A communication method by which an Enterprise Management System, EMS, (10), a system Battery Management System, BMS, (20), and a rack BMS (30) included in an energy storage system, ESS, (1) communicate with each other, the communication method comprising:
receiving, by the system BMS (20) from the EMS (10), a Transmission Control Protocol/Internet Protocol, TCPIP, communication command including a Controller Area Network, CAN, communication command for controlling the rack BMS (30); and
converting, by the system BMS (20), TCPIP format to CAN format based on the TCPIP communication command and transmitting the converted CAN communication command to the rack BMS (30).

2. The communication method as claimed in claim 1, wherein the receiving of the TCPIP communication command includes performing, by the system BMS (20) and the EMS (10), TCPIP communication (12) with each other.

3. The communication method as claimed in claim 1 or 2, wherein the receiving of the TCPIP communication command includes the system BMS (20) receiving the TCPIP communication command including a CAN communication command including information about a CAN ID and CAN data, in TCPIP format.

4. The communication method as claimed in claim 3, wherein the receiving of the TCPIP communication command includes:
receiving two TCPIP communication commands mapped to a CAN ID and four TCPIP communication commands mapped to CAN data, and
the transmitting of the converted CAN communication command to the rack BMS (30) includes transmitting the CAN communication command including the CAN ID and the CAN data.

5. The communication method as claimed in one of the preceding claims, wherein the transmitting of the converted CAN communication command to the rack BMS (30) includes performing CAN communication with each other, by the system BMS (20) and the rack BMS (30).

6. A computer program stored on a recording medium comprising instructions which, when the program is executed by a computer, cause the computer to carry out the steps of the method of one of claims 1 through 5.

7. A communication system in which an Enterprise Management System, EMS, (10), a system Battery Management System, BMS, (20) and a rack BMS (30) included in an energy storage system, ESS, (1) are configured to communicate with each other, the communication system comprising:
the system BMS (20) configured to receive a Transmission Control Protocol/Internet Protocol, TCPIP, communication command including a Controller Area Network, CAN, communication command for controlling the rack BMS (30) from the EMS (10), convert TCPIP format to CAN format based on the TCPIP communication command, and transmit the converted CAN communication command to the rack BMS (30).

8. The communication system as claimed in claim 7, wherein the system BMS (20) is adapted to perform TCPIP communication (12) with the EMS (10).

9. The communication system as claimed in claim 7 or 8, wherein the system BMS (20) is adapted to receive the TCPIP communication command including a CAN communication command including information about a CAN ID and CAN data, in TCPIP format.

10. The communication system as claimed in claim 9, wherein the system BMS (20) is adapted to receive two TCPIP communication commands mapped to a CAN ID and four TCPIP communication commands mapped to CAN data, and to transmit the CAN communication command including the CAN ID and the CAN data.

11. The communication system as claimed in one of claims 7 to 10, wherein the system BMS (20) is adapted to perform CAN communication with the rack BMS (30).
